# FASCICULE DE BREVET EUROPEEN

(11) **EP 3 692 354 B1**
(45) Date de publication et mention de la délivrance du brevet: **24.05.2023**
(21) Numéro de dépôt: 18804367.3
(22) Date de dépôt: 08.10.2018
(51) Int. Cl.: G01N 1/28, G01N 1/31

(54) **DISPOSITIF ET PROCEDE DE COLORATION D'UN MATERIAU ORGANIQUE SUR UNE LAME**
VORRICHTUNG UND VERFAHREN ZUM ANFÄRBEN EINES ORGANISCHEN MATERIALS AUF EINEM OBJEKTTRÄGER
DEVICE AND METHOD FOR COLORING AN ORGANIC MATERIAL ON A SLIDE

(30) Priorité: 06.10.2017 FR 1759397
(43) Date de publication de la demande: 12.08.2020
(73) Titulaire: Diagdev, 34160 Castries (FR)
(72) Inventeur: MORENO, Paul, 34070 Montpellier (FR)
(74) Mandataire: Cornuejols, Georges
(86) Numéro de dépôt international: PCT/FR2018/052480
(87) Numéro de publication internationale: WO 2019/069038

(56) Documents cités:
- WO-A1-2012/064873
- WO-A1-2014/145614
- US-A- 5 650 332
- US-A- 5 854 075

## Description

### DOMAINE TECHNIQUE DE L'INVENTION

La présente invention vise un dispositif et un procédé de coloration d'un liquide organique sur au moins une lame.

Elle s'applique, notamment, au domaine des analyses de biologie médicale et plus particulièrement dans le domaine de l'hématologie, de la bactériologie ou de l'histologie.

### ETAT DE LA TECHNIQUE

La coloration est une activité courante des laboratoires d'analyses médicales incluant les médecins et des vétérinaires. Elle peut être manuelle ou automatisée.

Dans le domaine de l'hématologie, l'opérateur étale une goutte de sang sur une lame de verre afin de constituer une fine couche de cellules sanguines. Après séchage, le frottis est mis au contact d'un colorant ou successivement de plusieurs colorants, chacun étant spécifique d'une famille de cellules. Le temps de contact des cellules avec l'ensemble des colorants permet d'ajuster l'intensité de la coloration. Un nettoyant de type tampon est souvent nécessaire en fin de cycle de coloration. Cette étape de coloration est indispensable pour l'identification des cellules sous microscope.

La demande internationale de brevet WO 2014/145614 A1 décrit un dispositif de coloration d'un échantillon biologique sur une lame, le dispositif comprenant un porte-lames et un piston distributeur pour distribuer des réactifs sur la lame. Le piston du distributeur peut en même temps être utilisé pour aspirer les fluides de la surface de la lame.

Dans le domaine de la bactériologie, l'opérateur dépose une fraction d'un prélèvement sur une lame de verre puis le fixe à la chaleur. Le prélèvement est ensuite mis en contact avec un ou plusieurs colorants ou décolorants afin de différencier l'élément recherché. Les prélèvements sont issus, par exemple, d'urine, de pus ou de milieux de culture. Les deux colorations les plus courantes sont la coloration dite « de GRAM » pour différencier les bactéries de type GRAM+ et GRAM-, et la coloration pour la détection de la tuberculose.

Le domaine de l'histologie est similaire. Les prélèvements sont issus de tissus humains. La coloration la plus courante est celle dite de Papanicolaou notamment très utilisée pour les frottis vaginaux. Les colorant et alcools sont nombreux.

Il n'existe pas de protocoles rigoureux pour la coloration manuelle pouvant s'apparenter à des procédés de référence. Quel que soit le domaine, l'opérateur peut choisir de mettre les différents colorants et liquides de rinçage dans différents bocaux puis d'immerger successivement ses lames à colorer dans les bocaux préalablement préparés. Il peut opérer différemment en posant les lames à colorer sur des barres disposées au-dessus d'un évier puis de verser les différents colorants et liquides de rinçage en abondance à l'aide de pissettes de laboratoire, provoquant ainsi un débordement.

Dans tous les cas, les temps de contact avec les différents produits déterminés par un protocole doivent être respectés nécessitant ainsi l'utilisation de chronomètres ou de minuteries. Il faut ensuite sécher les lames pour les rendre utilisables sous microscope.

Il existe également un dispositif de coloration automatique par trempage. Dans ce mode de réalisation courant de coloration automatique par trempage, les lames sont regroupées dans un panier, généralement d'une capacité de 10 à 20 lames. Le panier est pris en charge par un mécanisme qui permet de l'immerger successivement dans une pluralité de bacs contenant les différents colorants et le liquide de rinçage. Un dernier bac vide équipé d'une ventilation peut être réservé pour le séchage des lames en fin de cycle de coloration.

Dans le cas de l'hématologie et selon les méthodes traditionnelles, par exemple, May Grunwald Giemsa ou Wright Giemsa, il est indispensable de diluer le colorant de Giemsa juste avant son utilisation.

Quel que soit le domaine, il est connu que ce type de colorateur entraine la contamination d'un réactif par le précédent avec pour conséquence une dégradation progressive de la coloration. La contamination d'une lame par une autre (cellules passant d'une lame à une autre) reste possible du fait de la présence d'échantillons différents dans les mêmes bains. Ce risque est souvent jugé inacceptable en bactériologie. Dans l'ensemble, la consommation de colorant et la production de déchets sont importants.

Une variante de la coloration automatique par trempage consiste à utiliser une pluralité de cuves de coloration unitaires. Celles-ci sont successivement remplies avec les différents colorants ou liquides de rinçage. Dans cet exemple de réalisation, les colorants sont le plus souvent jetés après usage ce qui garantit une grande répétabilité et une qualité constante de la coloration. Le risque de contamination inter échantillon est éliminé. La consommation de colorants reste élevée.

Il existe également des dispositifs de coloration automatique par capillarité appliqué uniquement dans le domaine de l'hématologie. Elle utilise le principe de capillarité et utilise très peu de colorants. La coloration est dérivée de la coloration rapide. Le protocole de coloration est unique et non paramétrable.

Des procédés de la coloration automatique par versement de liquide existent qui reproduisent la coloration manuelle au-dessus de l'évier vue ci-dessus. Les lames à colorer sont disposées sur un plateau tournant. Chaque lame passe sous une série de pissettes et reçoit le colorant prévu par le protocole. Les lames sont vidées par accélération du plateau tournant et pré-séchées de la même manière. Le risque de contamination entre lames est éliminé mais la consommation de colorants, utilisés en excès, est importante. Le nettoyage du bol de la centrifugeuse n'est pas plaisant pour l'opérateur.

Finalement, la coloration automatique par pulvérisation existe. Les lames sont disposées sur un rotor de centrifugeuse avec le frottis orienté vers la paroi de la centrifugeuse qui est équipée de plusieurs buses qui vaporisent le colorant sélectionné au passage de la lame. Le colorant n'est utilisé qu'une seule fois. L'inconvénient majeur de cette technique est le risque de bouchage des buses de pulvérisation nécessairement de petit diamètre. Des colorants spéciaux ont dû être développés pour pallier cet inconvénient majeur. Les procédures de maintenance et de vérification doivent être absolument respectées.

La coloration des lames en positon horizontale présente l'intérêt de ne pas nécessiter de cuves ou de bacs pour contenir les différents « fluides » à mettre en contact avec les cellules, généralement des colorants et du liquide de rinçage. L'état de l'art montre qu'en situation horizontale, les fluides sont versés sur la lame par débordement et donc en excès. Il est nécessaire alors de disposer d'un bocal de récupération qu'il faudra vidanger et nettoyer. Les inconvénients majeurs sont la consommation de colorants qui n'est pas optimisée avec pour conséquence directe une augmentation du volume de déchets à traiter et, dans le cadre de l'automatisation, l'impossibilité de transporter proprement la lame.

### OBJET DE L'INVENTION

La présente invention vise à remédier à tout ou partie de ces inconvénients. Notamment, la présente invention vise à avoir une automatisation de la coloration avec une lame disposée en position horizontale, à éliminer tout risque de contamination inter échantillon tout en utilisant une quantité limitée de colorant, limitant ainsi la production de déchets.

A cet effet, selon un premier aspect, la présente invention vise un dispositif de coloration d'un élément organique sur au moins une lame, la lame définissant un axe contenu dans le plan de la lame, caractérisé en ce qu'il comporte :
- au moins un support de la lame sur lequel est disposé la lame de disposition de l'élément organique,
- au moins un moyen de répartition d'un fluide de coloration et/ou d'un fluide de rinçage sur la lame, associé à un moyen de déplacement relatif en translation par rapport à la lame selon l'axe de la lame, le moyen de répartition comportant un élément linéaire selon un axe perpendiculaire à l'axe de la lame et alimenté en fluide à répartir et
- au moins un moyen d'aspiration du fluide de coloration et/ou d'un fluide de rinçage, associé à un moyen de déplacement relatif en translation par rapport à la lame selon l'axe de la lame.

Le dispositif de la présente invention est défini dans la revendication 1.

Grâce à ces dispositions, la consommation de fluides est faible et donc la production de déchets à traiter par le laboratoire est faible. De plus, le dispositif objet de la présente invention offre la possibilité d'effectuer un mélange de fluides directement sur la lame puis de l'homogénéiser parfaitement si nécessaire. Aussi, le dispositif objet de la présente invention présente une absence de bacs ou autre contenant à nettoyer. La faible quantité de fluide sur la lame rend possible son transport sans débordement dans le cadre de l'automatisation. Le moyen de répartition est capable d'effectuer la distribution du fluide, sa répartition et son homogénéisation éventuelle.

Comparé à la coloration capillaire, le dispositif objet de la présente invention n'est pas limité à l'hématologie avec un seul protocole et un seul jeu de colorant utilisable.

Comparé à la colorisation automatique par pulvérisation, le dispositif objet de la présente invention se différencie par l'absence de pulvérisation dont les principaux inconvénients sont le risque de bouchage des buses d'injection qui oblige le laboratoire à utiliser des jeux de colorants dédiés, et la nécessité de nettoyer le bol de la centrifugeuse.

Le dispositif objet de la présente invention permet l'utilisation d'une faible quantité de fluide qui ne sont utilisés qu'une seule fois afin d'assurer une coloration de qualité constante et répétable, le traitement individuel de chaque lame éliminant le risque de contamination d'une lame sur l'autre et la faible quantité de déchets biologique produits et à traiter.

Comparé aux colorations par trempage, le dispositif objet de la présente invention permet un traitement individuel de chaque lame avec des colorants utilisés une seule fois. Cette disposition élimine ainsi tout risque de contamination d'un colorant par le précédent ou d'un échantillon par un autre.

Comparé à la coloration automatisée par versement de colorant, le dispositif objet de la présente invention se différencie nettement par la faible quantité de colorants utilisés et l'absence de nettoyage d'un bocal de récupération des fluides.

Comparé aux colorations par trempage dans des cuves collectives le dispositif objet de la présente invention se différencie nettement par la faible quantité de colorants utilisés, l'absence de risque de contamination entre lames et la réduction des émanations.

Comparé aux colorations par trempage dans des cuves individuelles le dispositif objet de la présente invention se différencie nettement par la faible quantité de colorants utilisés et la réduction des émanations.

Dans des modes de réalisation, au moins un moyen d'aspiration comporte un élément linéaire selon un axe perpendiculaire à l'axe de la lame pour véhiculer un fluide aspiré.

Ces modes de réalisation permettent d'aspirer les liquides à enlever de la lame sur toute la largeur de la lame. La vitesse de déplacement du moyen d'aspiration sur la lame, la force de l'aspiration et le nombre de passage permet d'enlever partiellement ou totalement le fluide présent sur la lame.

Dans des modes de réalisation, l'élément linéaire d'au moins un moyen de répartition est l'élément linéaire d'au moins un moyen d'aspiration.

L'avantage de ces modes de réalisation est de limiter l'encombrement du dispositif.

Selon la présente invention, le moyen d'aspiration est disposé successivement au moyen de répartition, et le dispositif comporte un moyen de commande du moyen de répartition et du moyen d'aspiration simultanément créant un écoulement turbulent pour nettoyer la lame.

L'avantage de ces modes de réalisation est de créer un frottement mécanique d'un mélange de liquide et d'air nettoyant les impuretés de l'élément organique répartit sur la lame sans décoller les cellules contenues dans l'élément organique.

Dans des modes de réalisation, au moins un moyen de répartition comporte deux moyens d'alimentation en fluide mis en oeuvre simultanément.

Ces modes de réalisations permettent de mélanger directement sur la lame des colorants sensibles qui doivent être appliqué immédiatement après le mélange, par exemple le Giemsa. Les liquides sont donc mélangés sur la lame par les deux moyens d'alimentation.

Dans des modes de réalisation, le moyen de répartition comporte un moyen de mélange des fluides issus des moyens d'alimentation.

Ces modes de réalisation permettent de s'assurer du mélange des fluides issus des différents moyens d'alimentation.

Dans des modes de réalisation, pour l'hématologie, dans lequel l'élément organique est un liquide organique, qui comporte, de plus :
- au moins un distributeur d'au moins une goutte de liquide organique sur la lame placée sur le support,
- au moins un moyen d'étalement perpendiculaire à l'axe de la lame étalant le liquide organique dans l'axe de la lame et
- au moins un moyen de relèvement d'un moyen d'étalement désactivé pour abaisser le moyen d'étalement au-dessus de la lame pour venir en contact avec la goutte de liquide organique qui migre par capillarité sur le moyen d'étalement perpendiculaire à l'axe de la lame, la goutte étant étalée par déplacement relatif entre le moyen d'étalement et la lame.

Grâce à ces dispositions, le dispositif objet de la présente invention réalise le frottis ainsi que la coloration. La lame peut donc être traitée intégralement par le dispositif.

Dans des modes de réalisation, le dispositif objet de la présente invention comporte un réservoir de nettoyage du moyen d'étalement dans lequel le moyen d'étalement est abaissé pour être nettoyé.

Ces modes de réalisation permettent de nettoyer le moyen d'étalement entre deux lames juxtaposées, par exemple.

Dans des modes de réalisation, le volume d'un fluide de coloration et/ou d'un fluide de rinçage réparti est compris entre 0,4 millilitres et 1 millilitres pour une lame rectangulaire de 25 millimètres par 75 millimètres.

Grâce à ces dispositions, un très faible volume de liquide est réparti sur la lame, il n'y a donc pas de débordement du fluide de coloration et/ou du fluide de rinçage. Le déplacement de la lame est donc également facilité. De plus, la quantité de déchets est limitée.

Dans des modes de réalisation, le dispositif objet de la présente invention comporte au moins deux supports de lames juxtaposés et des moyens de déplacement relatif entre le dispositif de coloration et chaque lame, les moyens de déplacement étant configurés pour disposer le dispositif de coloration selon l'axe de chaque lame successivement.

L'avantage de ces modes de réalisation est d'automatiser la coloration pour plusieurs lames successives.

Selon un deuxième aspect, la présente invention vise un procédé de coloration d'un élément organique sur au moins une lame, la lame définissant un axe contenu dans le plan de la lame, caractérisé en ce qu'il comporte les étapes suivantes :
- disposition d'au moins une lame de disposition de l'élément organique sur au moins un support de la lame,
- répartition d'un fluide de coloration ou du fluide de rinçage sur la lame au moyen d'un élément linéaire selon un axe perpendiculaire à l'axe de la lame et
- aspiration du fluide de coloration et/ou d'un fluide de rinçage au moyen d'un élément linéaire selon un axe perpendiculaire à l'axe de la lame. Le procédé de la présente invention est défini dans la revendication 10.

Dans des modes de réalisation, le procédé objet de la présente invention comporte, de plus, les étapes suivantes :
- distribution d'au moins une goutte de liquide organique sur la lame,
- abaissement d'un moyen d'étalement au-dessus de la lame,
- étalement du liquide organique selon l'axe de la lame par déplacement entre le moyen d'étalement et la lame et
- relèvement du moyen d'étalement.

Les buts, avantages et caractéristiques particulières du procédé objet de la présente invention étant similaires à ceux du dispositif objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du dispositif et du procédé objets de la présente invention, en regard des dessins annexés, dans lesquels :
- la figure 1 représente, schématiquement et en vue de côté, un premier mode de réalisation particulier du dispositif objet de la présente invention,
- la figure 2 représente, schématiquement et en perspective, le premier mode de réalisation particulier du dispositif objet de la présente invention,
- la figure 3 représente, schématiquement et en vue de face, le premier mode de réalisation particulier du dispositif objet de la présente invention,
- la figure 4 représente, schématiquement et en vue de côté, un deuxième mode de réalisation particulier du dispositif objet de la présente invention,
- la figure 5 représente, schématiquement et en vue de côté, un troisième mode de réalisation particulier du dispositif objet de la présente invention,
- la figure 6 représente, schématiquement et sous forme d'un logigramme, une succession d'étapes particulière du procédé objet de la présente invention,

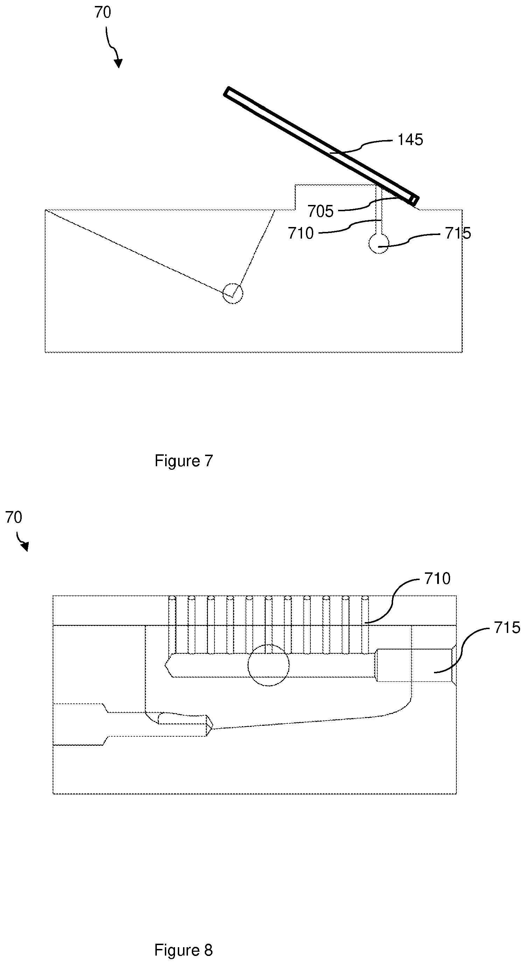

- la figure 7 représente, schématiquement et en vue de côté, un premier mode de réalisation particulier d'un réservoir de nettoyage et
- la figure 8 représente, schématiquement et en vue face, le premier mode de réalisation particulier d'un réservoir de nettoyage.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse. Par ailleurs, chaque paramètre d'un exemple de réalisation peut être mis en oeuvre indépendamment d'autres paramètres dudit exemple de réalisation.

On rappelle ici la signification des mots suivants :
- juxtaposé signifie placer des éléments côte à côte,
- successivement signifie l'un après l'autre et
- linéaire signifie qui a l'aspect continu d'une ligne.

On note dès à présent que les figures ne sont pas à l'échelle.

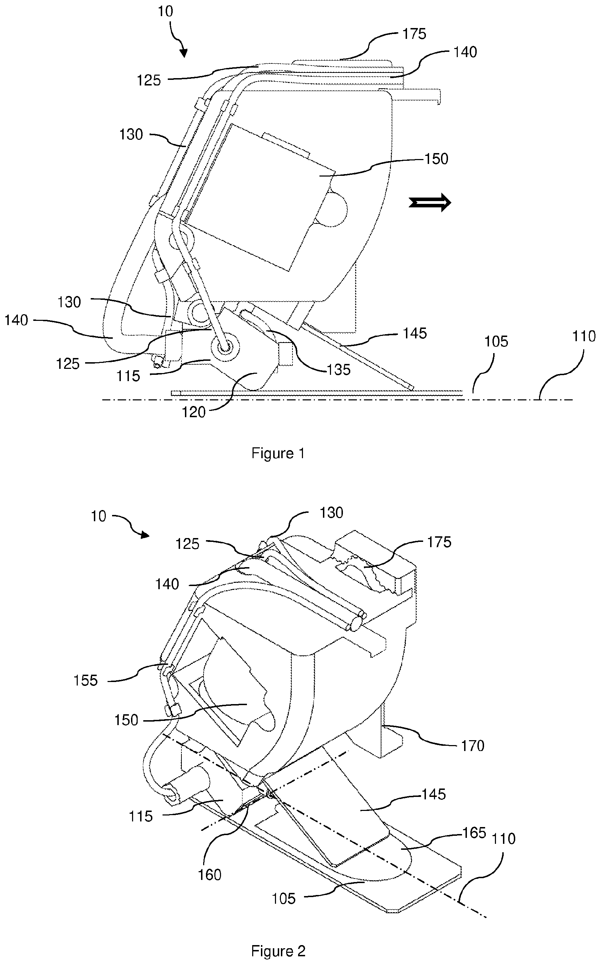

On observe, sur les figures 1 à 3, plusieurs vues schématiques d'un mode de réalisation du dispositif 10 objet de la présente invention. Le dispositif 10 de coloration d'un élément organique sur au moins une lame 105, comporte un support de lame 105 (non représenté) sur lequel est disposé la lame 105. La lame 105 définissant un axe 110 contenu dans le plan de la lame 105.

On rappelle ici qu'une lame d'analyses biomédicales est une bande mince, de forme rectangulaire et plate, en verre, utilisé comme support d'analyses médicales. L'axe de la lame 105 est l'axe passant par le milieu du rectangle de la lame 105 et parallèle au plus grand côté du rectangle. On rappelle également qu'un élément organique est du tissu corporel, du sang ou tout autre prélèvement effectué sur un être vivant.

Le support de lame 105 permet de poser la lame en position horizontale. Dans des modes de réalisation, le support de lame 105 maintient la lame en position horizontale. Le support de lame 105 peut être tout moyen connu de l'homme du métier fixé par rapport dispositif 10.

Dans des modes de réalisation, l'élément organique est disposé sur la lame 105 avant le placement de la lame 105 sur le support.

Le dispositif 10 comporte également un moyen de répartition 115 d'un fluide de coloration et/ou d'un fluide de rinçage sur la lame 105, associé à un moyen de déplacement 175 relatif en translation par rapport à la lame 105 selon l'axe 110 de la lame 105, le moyen de répartition 115 comportant un élément linéaire 120 selon un axe 160 perpendiculaire à l'axe 110 de la lame 105 et alimenté en fluide à répartir.

Dans des modes de réalisation, l'élément linéaire 120 présente au moins deux canaux débouchant proche de la lame. La distance entre la sortie des canaux 120 et la lame 105 est inférieure à cinq millimètres. Les canaux sont parallèles entre eux à proximité de la lame pour que chaque canal 120 délivre une quantité similaire de liquide. Préférentiellement, la distance entre la sortie des canaux 120 et la lame 105 est de 0,3 millimètres.

Dans des modes de réalisation, l'élément linéaire 120 présente une fente. Une fente est un orifice de forme inscrite dans un rectangle dont le rapport entre le grand et le petit côté est supérieur à deux. Préférentiellement, la fente est rectangulaire et la dimension du petit côté est égale à la dimension d'un canal.

L'élément linéaire 120 est alimenté par des tuyaux 125, 130, 135 de délivrance de fluides liés à des réservoirs (non représentés) comportant chaque fluide de coloration ou de rinçage. Une pompe (non représentée) gère l'approvisionnement en fluide depuis le réservoir.

Dans le mode de réalisation représenté en figures 1 à 3, le tuyau 135 est lié à un réservoir comportant un fluide de rinçage et les tuyaux, 125 et 130, sont liés à des réservoirs comportant des fluides de coloration. Préférentiellement, l'ensemble des tuyaux, 125, 130 et 135, débouchent dans le moyen de répartition 115 au milieu de la distance entre les canaux 120 les plus éloignés ou au milieu de la fente, par exemple.

Préférentiellement, le volume d'un fluide de coloration et/ou d'un fluide de rinçage réparti est compris entre 0,4 millilitres et 1 millilitres pour une lame 105 rectangulaire de 25 millimètres par 75 millimètres.

Dans des modes de réalisation, le moyen de répartition 115 comporte deux moyens d'alimentation en fluide mis en oeuvre simultanément. Un moyen d'alimentation comporte au moins un tuyau, 125, 130 ou 135, une pompe et un réservoir. Dans ces modes de réalisation, deux fluides de coloration réagissant ensemble pour colorer le fluide organique sont mélangés et délivrés simultanément. Les tuyaux, 125 et 130, sont alimentés simultanément en fluide de coloration. Par exemple, un fluide de coloration est le colorant Giemsa et un fluide de coloration est un diluant du colorant Giemsa.

Les moyens d'alimentations sont activés simultanément, par exemple suite à la commande issue de moyens de commande, et les deux fluides de coloration se mélangent à l'entrée des canaux 120 dans le moyen de répartition 115.

Dans des modes de réalisation, le moyen de répartition 115 comporte un moyen de mélange des fluides issus des moyens d'alimentation. Le moyen de mélange peut être une hélice, un mélangeur ou lorsque le moyen de répartition et le moyen d'aspiration sont confondus, une répartition des fluides mélangés à l'entrée des canaux, puis au moins une aspiration de ces fluides et une autre répartition des fluides aspirés. Plus généralement, le moyen de mélange est configuré pour créer un écoulement turbulent entre les fluides pour homogénéiser le mélange des fluides.

Dans des modes de réalisation, au moins un tuyau 130 est fixé aux moyens de répartition 115 par des pattes en forme de crochet déformable sur un boitier du dispositif 10. Dans des modes de réalisation, au moins un tuyau 125 est fixé aux moyens de répartition 115 en passant à travers le boitier du dispositif 10.

Le moyen de déplacement 175 peut être une crémaillère et une roue dentée correspondante ou un ensemble poulie et courroie, dans l'axe 110 de la lame 105. La commande du moyen de déplacement 175 peut être effectuée par un moteur pas à pas.

Le dispositif 10 comporte un moyen d'aspiration 115 du fluide de coloration et/ou d'un fluide de rinçage, associé à un moyen de déplacement 175 relatif en translation par rapport à chaque lame 105 selon l'axe 110 de ladite lame 105.

Préférentiellement, le moyen d'aspiration 115 comporte un élément linéaire selon un axe 160 perpendiculaire à l'axe 110 de la lame 105 pour véhiculer un fluide aspiré.

Dans des modes de réalisation, l'élément linéaire 120 présente au moins deux canaux débouchant proche de la lame 105. La distance entre la sortie des canaux 120 et la lame 105 est inférieure à cinq millimètres. Les canaux sont parallèles entre eux à proximité de la lame pour que chaque canal 120 aspire une quantité similaire de liquide. Préférentiellement, la distance entre la sortie des canaux 120 et la lame 105 est de 0,3 millimètres.

Dans des modes de réalisation, l'élément linéaire 120 présente une fente. Une fente est un orifice de forme inscrite dans un rectangle dont le rapport entre le grand et le petit côté est supérieur à deux. Préférentiellement, la fente est rectangulaire et la dimension du petit côté est égale à la dimension d'un canal.

L'élément linéaire 120 est lié à un tuyau 140 d'aspiration de déchets de fluides lié à un réservoir de déchets. Une pompe (non représentée), par exemple pilotée par un moyen de commande, gère l'aspiration des fluides sur la lame 105 vers le réservoir de déchets. Préférentiellement, le tuyau 140 débouche dans le moyen d'aspiration 115 au milieu de la distance entre les canaux 120 les plus éloignés ou au milieu de la fente, par exemple.

Dans des modes de réalisation, le tuyau 140 est fixé au moyen d'aspiration 115 par des pattes en forme de crochet déformable sur un boitier du dispositif 10. Dans des modes de réalisation, le tuyau 140 est fixé au moyen d'aspiration 115 en passant à travers le boitier du dispositif 10.

Le moyen de déplacement 175 peut être une crémaillère et une roue dentée correspondante ou un ensemble poulie et courroie, dans l'axe 110 de la lame 105. La commande du moyen de déplacement 175 peut être effectuée par un moteur pas à pas.

Préférentiellement, l'élément linéaire 120 du moyen de répartition 115 est l'élément linéaire 120 du moyen d'aspiration 115. Ce mode de réalisation est représenté en figure 1. Dans des modes de réalisation, l'ensemble des tuyaux, 125, 130, 135 et 140, débouchent dans le moyen de répartition 115 au milieu de la distance entre les canaux 120 les plus éloignés ou au milieu de la fente, par exemple.

Selon la présente invention, le moyen d'aspiration 115 est disposé successivement au moyen de répartition 115 selon l'axe 110 de la lame 105, la mise en oeuvre simultanée du moyen de répartition 115 et du moyen d'aspiration 115 créant un écoulement turbulent pour nettoyer la lame 115. Autrement dit, le moyen d'aspiration est disposé successivement au moyen de répartition, et le dispositif comporte un moyen de commande du moyen de répartition et du moyen d'aspiration simultanément créant un écoulement turbulent pour nettoyer la lame. Dans ces modes de réalisation un liquide de nettoyage est éjecté par le moyen de répartition 115 et immédiatement aspiré par le moyen d'aspiration 115.

L'aspiration par le moyen d'aspiration 115 aspire simultanément de l'air et le liquide éjecté, créant ainsi un frottement mécanique entre le liquide de nettoyage et l'élément organique coloré. Les impuretés de l'élément organique coloré sont détachées de l'élément organique coloré et aspirées avec le liquide de nettoyage. Les cellules colorées sont maintenues en place. Les impuretés sont, par exemple, des précipités de colorant formés lors de la répartition du colorant.

Préférentiellement, la distance entre l'élément linéaire 120 du moyen de répartition 115 et l'élément linéaire 120 du moyen d'aspiration 115 est inférieure à deux millimètres. Et les éléments linéaires 120 sont parallèles.

Dans des modes de réalisation, pour l'hématologie, le dispositif 10 comporte, de plus :
- au moins un distributeur 170 d'au moins une goutte de liquide organique sur la lame placée sur le support,
- au moins un moyen d'étalement 145 perpendiculaire à l'axe 110 de la lame 105 étalant le liquide organique dans l'axe 110 de la lame 105 et
- au moins un moyen de relèvement 150 d'un moyen d'étalement 145 désactivé pour abaisser le moyen d'étalement 145 au-dessus de la lame 105 pour venir en contact avec la goutte de liquide organique qui migre par capillarité sur le moyen d'étalement perpendiculaire à l'axe 110 de la lame 105, la goutte étant étalée par déplacement relatif entre le moyen d'étalement 145 et la lame 105.

Le dispositif 10 comporte également un distributeur 170 d'au moins une goutte de liquide organique sur la lame 105. Le distributeur 170 peut comporter un moyen de mise en rotation du liquide organique.

Le moyen d'étalement 145 est préférentiellement une lame rectangulaire dont le côté de plus petite dimension est de dimension inférieure ou égale à la dimension de la lame 105 perpendiculairement à l'axe 110 de la lame 105. La lame du moyen d'étalement 145 est insérée dans un support compotant une partie en matériau sensible à une force magnétique juxtaposée à une partie en verre. Le moyen d'étalement 145 comporte un moyen de mise en rotation par rapport au boitier du dispositif 10. L'axe de rotation du moyen de mise en rotation du moyen d'étalement 145 est perpendiculaire à l'axe 110 de la lame 105. L'axe de rotation est situé à la jonction de la partie en matériau sensible à une force magnétique et de la partie en verre.

Le moyen de relèvement 150 est un électroaimant localisé au-dessus de la partie en matériau sensible à une force magnétique. L'électroaimant, une fois relâché, libère la partie de la lame du moyen d'étalement 145 en matériau sensible à une force magnétique ce qui provoque l'abaissement de la partie en verre vers la lame 105. La pression appliquée sur la lame 105 par le moyen d'étalement 145 est assurée par au moins un ressort.

Seul le segment de droite 146 à l'extrémité de la partie de la lame en verre est en contact avec la lame 105. Ainsi, une goutte de liquide organique placée sur l'axe 110 de la lame 105 est répartie sur le segment de droite 146 par capillarité lorsque le segment de droite 146 vient en contact avec la goutte. Puis, la goutte ainsi répartie sur le segment de droite 146 est entrainé par déplacement du moyen d'étalement 145 abaissé selon l'axe 110 de la lame 105 et donc étalée par capillarité. Le segment de droite 146 forme un angle avec la lame 105 de telle sorte que seule une arête du parallélépipède formé par la lame du moyen d'étalement 145 est en contact avec la lame 105.

Le déplacement peut être effectué par un moyen de déplacement 175. Le moyen de déplacement 175 peut être une crémaillère et une roue dentée correspondante ou un ensemble poulie et courroie, dans l'axe 110 de la lame 105. La commande du moyen de déplacement 175 peut être effectuée par un moteur pas à pas.

Dans des modes de réalisation, le moyen de répartition 145 peut être une lame abaissée par translation. Dans des modes de réalisation, le moyen de relèvement 150 peut être tout moyen de mise en rotation ou en translation d'un élément connu de l'homme du métier.

Dans des modes de réalisation, le dispositif 10 comporte un réservoir 70 de nettoyage du moyen d'étalement 145 dans lequel le moyen d'étalement 145 est abaissé pour être nettoyé. Le réservoir de nettoyage est placé dans l'axe 110 de la lame 105. Une fois la goutte étalée, le moyen d'étalement 145 est relevé et abaissé à nouveau dans le réservoir 70 de nettoyage pour éviter toute contamination d'un échantillon de fluide organique par un autre.

Le réservoir de nettoyage 70 présente une forme en chanfrein pente ou côté de triangle 705 et peut comporter, sur une surface, un moyen de répartition 710 et un moyen d'aspiration 710 similaires à ceux décrits ci-dessus créant un écoulement turbulent comme indiqué ci-dessus. Le fluide utilisé est un diluant isotonique. Dans d'autres modes de réalisation, le fluide isotonique est réparti dans le réservoir de nettoyage 70 est le nettoyage est effectué par trempage du moyen d'étalement 145.

Préférentiellement, le réservoir de nettoyage 70 comporte une vidange 715 de fluide de nettoyage.

Sur les figures 1 à 3, le mode de réalisation du dispositif 10 représenté comporte le distributeur d'au moins une goutte de liquide organique, le moyen de répartition 115 et le moyen d'aspiration 115 dont les canaux 120 sont confondus, le moyen de relèvement 150 et le moyen d'étalement 145 réunis en un boitier. Les moyens de déplacement 175 du moyen de répartition, du moyen d'aspiration 115 ainsi du moyen d'étalement 145 sont un unique moyen de déplacement 175. Le dispositif 10, des figures 1 à 3, est monté sur un châssis (non représenté) comportant un support de lame 105 fixe par rapport au châssis. Les moyens de déplacement 175, déplacent le dispositif 10 par rapport au châssis, selon l'axe 110 de ladite lame 105.

Dans d'autres modes de réalisation, le dispositif 10 est fixe par rapport au châssis et chaque lame 105 est mobile par rapport au châssis. Le moyen de déplacement 175, déplace chaque lame 105 par rapport au châssis, selon l'axe 110 de ladite lame 105.

Ces modes de réalisation permettent d'avoir un dispositif 10 compact particulièrement adapté à des laboratoires d'analyse effectuant un nombre restreint d'analyse quotidiennement.

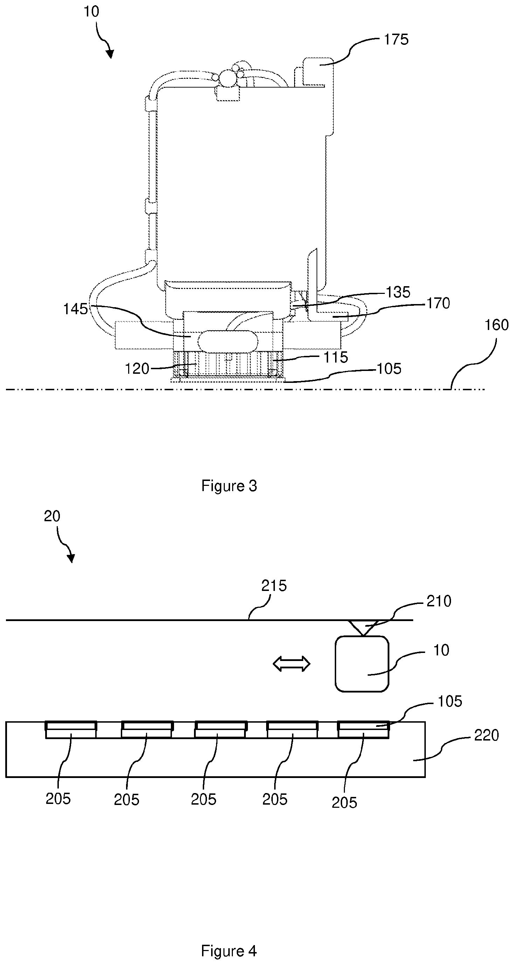

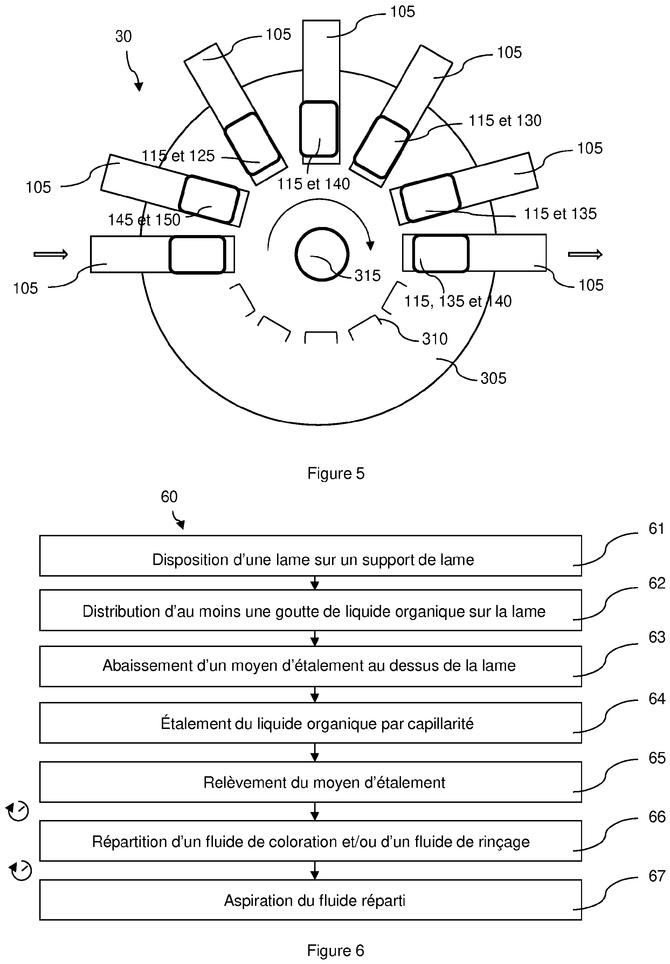

Les modes de réalisation du dispositif, 20 et 30, de coloration représentés en figures 4 et 5, le dispositif, 20 ou 30, comporte au moins deux supports, 205 ou 310, de lame 105 juxtaposés et des moyens de déplacement, 210 ou 315, relatifs entre le dispositif de coloration et chaque lame configurés pour disposer le dispositif 10 de coloration selon l'axe 110 de chaque lame 105 successivement.

Sur la figure 4, chaque support de lame 205 maintient une lame 105 en position horizontale sur un râtelier 220. Les axes 110 des lames 105 sont parallèles. Le moyen de déplacement 210 est une crémaillère et un moyen correspondant ou un ensemble poulie et courroie, dans un axe perpendiculaire à l'axe 215 de chaque la lame 105. Le moyen de déplacement 210 peut être tout moyen de déplacement en translation connu de l'homme du métier. La commande du moyen de déplacement 210 peut être effectuée par un moteur pas à pas. Sur la figure 4, le dispositif 10 correspond au dispositif 10 représenté en figures 1 à 3.

Le dispositif 10 effectue un premier passage pour étaler les frottis et plusieurs autres passages, espacés de durées contrôlés, par exemple par un moyen de commande, en fonction des temps de contact des colorants, pour les différents colorants et le rinçage. Dans des modes de réalisation, le dispositif 10 possède également des moyens pour homogénéiser les tubes de sangs, percer le bouchon, prélever du sang et former une goutte.

On observe sur la figure 5, un troisième mode de réalisation du dispositif 30 objet de la présente invention. Dans le dispositif 30, les différents moyens réalisant les différentes fonctions sont séparés en au moins deux modules de dispositif 10 différents. L'ensemble des modules forme le dispositif objet de la présente invention.

Dans le mode de réalisation représenté, les modules sont disposés en arc de cercle et chaque lame se déplace par rapport aux modules suivant un axe correspondant au rayon de l'arc de cercle qui correspond à une position de l'axe 110 d'une lame 105. Le dispositif 30 comporte plusieurs supports de lame 310, les supports de lame 310 sont disposé en cercle sur un carrousel présentant une forme de disque circulaire 305. On rappelle ici qu'un carrousel est un appareil destiné au transport, en circuit fermé, de charges, d'objets ou de marchandises.

Les lames 105 sont chargées sur le carrousel 305 lorsque le support de lame 310 se situe à un premier emplacement, représenté par une flèche vers le carrousel 305 à gauche de la figure 5. La lame 105 est déchargée du carrousel 305 selon un emplacement autre que l'emplacement de chargement, et avant une rotation complète du carrousel 305. Le chargement et le déchargement des lames peuvent être automatisés.

L'axe 110 de chaque lame 105 correspond à un rayon du carrousel. L'arc de cercle entre l'axe 110 de chaque lame 105 est identique. Les supports 310 de lame 105 sont répartis de manière équilibrée sur une face supérieure du carrousel 305.

On considère que le carrousel comporte n emplacements juxtaposés ou côte à côte sur l'arc de cercle, chaque emplacement formant un rayon différent. Un module du dispositif 10 peut être disposé en regard d'un emplacement. Un module peut comporter :
- un distributeur 170 d'au moins une goutte de liquide organique sur une lame 105,
- un moyen de répartition 115 d'un fluide de coloration,
- un moyen de répartition 115 d'un fluide de rinçage,
- un moyen de répartition 115 comportant deux moyens d'alimentation en fluide de coloration mis en oeuvre simultanément.
- un moyen d'aspiration 115 différent de chaque moyen de répartition,
- un moyen de répartition 115 dont les canaux 120 sont confondus avec les canaux un moyen d'aspiration 115,
- un moyen d'étalement 145 et un moyen de relèvement 150,
- un moyen de répartition et un moyen d'aspiration disposés successivement, le dispositif comporte un moyen de commande du moyen de répartition et du moyen d'aspiration simultanément créant un écoulement turbulent pour nettoyer la lame,
- ou une combinaison des moyens ci-dessus.

Un exemple du mode de réalisation représenté en figure 5 est décrit ci-après.

La position de chargement comporte un module comportant un distributeur 170. Le module de la position successive comporte un moyen d'étalement 145 et un moyen de relèvement 150. Puis, le module suivant comporte un moyen de répartition 115 d'un fluide de coloration. Le module juste après comporte un moyen d'aspiration 115 d'un fluide de coloration. Le module successif comporte un moyen de répartition 115 de deux fluides de coloration simultanément. Puis, le module suivant comporte un moyen de répartition 115 d'un fluide de rinçage. Enfin, le dernier module avant le déchargement comporte un module d'aspiration 115 du liquide de rinçage.

L'emplacement du déchargement est représenté par une flèche sur la droite du dispositif 30 de la figure 5. La rotation du carrousel 305 peut être rythmée par des phases de séchage de durée prédéterminée. Préférentiellement, pour contrôler le temps de séchage pour chaque phase de coloration, chaque moyen de répartition 115 comporte des canaux 120 confondus avec un moyen d'aspiration. Les moyens d'aspiration 115 de modules différents peuvent donc être activés à différents instants en fonction du temps de séchage ou d'attente nécessaire pour chaque colorant avant une rotation du carrousel 305.

Le carrousel 305 peut être cadencé pour changer de position à fréquence fixe. La fréquence peut être comprise entre 30 et 60 secondes. Les différents modules sont répartis sur la périphérie du carrousel 305 qui comporte plusieurs emplacements. Préférentiellement, le carrousel comporte un nombre supérieur à dix emplacements. Préférentiellement, le carrousel 305 comporte une quarantaine d'emplacements.

Par exemple, dans des modes de réalisation : une première lame 105 est disposée sur le carrousel 305, le carrousel 305 tourne d'une position ce qui permet de la mettre en position d'étalement et, éventuellement d'en déposer une autre. Le frottis doit sécher quelques minutes avant de recevoir un premier colorant. Il faut donc disposer le premier module de coloration non pas à la suite mais plusieurs postes plus loin en fonction de la cadence de rotation et du temps de séchage désiré.

Dans des modes de réalisation, le dispositif 30 est accompagné d'un module comportant un convoyeur en translation sur lequel sont disposées des lames 105 selon leur axe 110. Chaque lame 105 est d'abord positionnée sous un distributeur, puis sous un moyen d'étalement 145, muni d'un moyen de relèvement 150, qui s'abaisse alors qu'une goutte est versée sur une lame précédente. La translation du convoyeur réparti alors le liquide organique sur la lame 105.

Dans ce mode de réalisation, les lames 105 sont chargées sur le carrousel 305 imprégnées du liquide organique séché.

On observe sur la figure 6, une succession d'étape du procédé 60 de coloration d'un liquide organique sur au moins une lame 105, la lame 105 définissant un axe 110 contenu dans le plan de la lame 105 qui comporte les étapes suivantes :
- disposition 61 d'au moins une lame 105 sur au moins un support, 205 ou 310, de la lame 105,
- répartition 66 d'un fluide de coloration ou d'un fluide de rinçage sur la lame 105 au moyen d'un élément linéaire 120 selon un axe perpendiculaire à l'axe 110 de la lame 105 et
- aspiration 67 du fluide de coloration et/ou du fluide de rinçage au moyen d'un élément linéaire 120 selon un axe 160 perpendiculaire à l'axe 110 de la lame 105.

Dans des modes de réalisation, le procédé 60 comporte, de plus, les étapes suivantes :
- distribution 62 d'au moins une goutte de liquide organique sur la lame 105,
- abaissement 63 d'un moyen d'étalement 145 au-dessus de la lame 105,
- étalement 64 du liquide organique selon l'axe 110 de la lame 105 par déplacement entre le moyen d'étalement 145 et la lame 105 et
- relèvement 65 du moyen d'étalement 145.

Préférentiellement, le procédé 60 comporte une étape de séchage du liquide organique et/ d'un fluide de coloration. L'étape de séchage a préférentiellement lieu après chaque étape d'étalement et après chaque étape de répartition. L'étape de séchage est représentée par un chronomètre sur la figure 6.

L'étape de disposition 61 peut être manuelle, par exemple sur un support 205 de la figure 2 ou automatisé, par exemple sur un support 310 du dispositif 30.

L'étape de distribution 62 est réalisée par un distributeur 170. Préférentiellement, la goutte est distribuée sur l'axe 110 de la lame 105. Préférentiellement, la goutte est distribuée dans une zone de la lame 105 autour du milieu de la lame 105 selon l'axe 110 et dont la dimension selon l'axe 110 de la lame 105 est inférieure à soixante-quinze pourcents de la dimension de la lame 105. Une goutte présente un volume de l'ordre de cinq microlitres.

L'étape d'abaissement 63 est mise en oeuvre par les moyens de relèvement 150. L'étape d'étalement 64 est réalisée par les moyens d'étalement 145 abaissés. Le déplacement des moyens d'étalement 64 selon l'axe de la lame 105 suffit à étaler le liquide organique par capillarité. L'étape de relèvement 65 est réalisée par d'activation des moyens de relèvement 150. Le moyen d'étalement 145 est relevé pour éviter d'interférer avec la coloration lors de l'étape de répartition 66.

L'étape de répartition 66 est mise en oeuvre par le moyen de répartition 115. Lors de l'étape de répartition 66, un fluide de coloration ou un fluide de rinçage peut être réparti. Dans des modes de réalisation, le procédé 60 comporte, de plus, une étape d'alimentation avec au moins deux fluides lors de l'étape de répartition 66. La répartition 66 est donc une répartition simultanée de deux fluides de coloration. L'étape de répartition 66 peut être précédée d'une étape de mélange de deux fluides de coloration. L'étape de répartition 66 peut être mise en oeuvre simultanément à une étape d'aspiration 67.

L'étape d'aspiration 67 est mise en oeuvre par le moyen d'aspiration 67.

Le procédé 60 peut comporter plusieurs répétitions d'un couple d'étapes de répartition 66 et d'aspiration 67.

Dans des modes de réalisation, le procédé 60 comporte de plus, une étape de déplacement relatif entre, une étape de répartition 66, une étape d'étalement 64 et/ou une étape d'aspiration 67, selon l'axe 110 d'une lame 105 à l'axe 110 d'une autre lame 105. De tels déplacements relatifs sont décrits en regard des figures 4 et 5, par exemple.

Dans des modes de réalisation, le procédé 60 comporte les étapes préalables suivantes :
- mélange de tubes de liquide organique par rotation et
- lors de l'étape de disposition 61 :
   - perçage d'un bouchon du tube par une aiguille,
   - prélèvement d'une quantité prédéterminée de liquide organique,
   - formation d'une goutte de liquide organique à l'extrémité d'un tuyau fin nommé « pipette » comporté par le distributeur est débouchant proche de la lame.

Dans des modes de réalisation, le procédé 60 comporte une étape de nettoyage du moyen d'étalement 145 par contact avec le liquide de nettoyage.

Préférentiellement, le procédé est mis en oeuvre par l'un des modes de réalisation du dispositif 10, 20 ou 30 exposés ci-dessus.

Sur les modes de réalisation représenté en figures 1 à 5, une lame 105 est placé dans un support de lame 205 au cours de l'étape de disposition 61. Puis une goutte de liquide organique est distribuée sur la lame 105 par les moyens de distribution au cours d'une étape de distribution 62. Le segment de droite 146 du moyen d'étalement 145 est placé en regard de la goutte puis abaissé au cours de l'étape d'abaissement 63. L'abaissement du moyen d'étalement 145 par le moyen de relèvement 150 répartit la goutte sur la lame 105 par capillarité. Puis le moyen d'étalement 145 abaissé est déplacé selon l'axe 110 de la lame 105 selon l'étape d'étalement 64. Le moyen d'étalement 145 est ensuite relevé au cours d'une étape de relèvement.

Le dispositif 10 ou un module du dispositif 10 ou la lame 105 est déplacé pour mettre en regard le moyen de répartition 115 avec l'emplacement auquel la goutte de liquide organique a été déposée. Le déplacement peut être selon l'axe de la lame 105 à un emplacement prédéterminé ou sous un module différent. Le moyen de répartition 115 est alimenté avec au moins un liquide de coloration et le dispositif 10 est déplacé selon l'axe 110 de la lame 105 dans le même sens que le sens d'étalement alors que le liquide de coloration est injecté et sort de l'élément linaire 120 au cours de l'étape de répartition 66.

Puis, le dispositif 10 ou un module du dispositif 10 ou la lame 105 est déplacé pour mettre en regard le moyen d'aspiration 115 avec l'emplacement auquel la goutte de liquide organique a été déposée. Le déplacement peut être selon l'axe de la lame 105 à un emplacement prédéterminé ou sous un module différent. Le moyen d'aspiration 115 est mis en fonctionnement et le dispositif 10 est déplacé selon l'axe 110 de la lame 105 dans le même sens que le sens d'étalement alors que le liquide de coloration est aspiré un élément linéaire 120 après une durée prédéterminée en fonction du liquide de coloration au cours de l'étape d'aspiration 67.

Les étapes de de répartition 66 et d'aspiration 67 peuvent être répétées plusieurs fois avec plusieurs fluides de colorations ou de rinçage différents. Les fluides de coloration peuvent être mélangés.

Préférentiellement, le procédé 60 met en oeuvre les fonctions du dispositif 10, 20 ou 30.

Comme on le comprend à la lecture de la présente description, les moyens suivants pourraient également être dénommés :
- pour un moyen de répartition : un répartiteur, un circuit de répartition ou un encore un répandeur,
- pour un moyen d'aspiration : un aspirateur, un circuit d'aspiration ou encore une pompe d'aspiration,
- pour un moyen de déplacement : un moteur de déplacement,
- pour un moyen de mélange : un mélangeur ou encore un mixeur,
- pour un moyen d'étalement : un étaleur ou encore un propageur,
- pour un moyen de relèvement : élévateur ou remonteur,
- pour un moyen de commande : contrôleur,
- pour un moyen de mise en rotation : un moteur de rotation et
- pour un moyen d'alimentation ; un circuit d'alimentation ou encore une pompe d'alimentation.

## Revendications

1. Dispositif (10, 20, 30) de coloration d'un élément organique sur au moins une lame (105), la lame définissant un axe (110) contenu dans le plan de la lame, qui comporte :
- au moins un support (205, 310) de la lame sur lequel est disposé la lame de disposition de l'élément organique,
- au moins un moyen de répartition (115) d'un fluide de coloration et/ou d'un fluide de rinçage sur la lame, associé à un moyen de déplacement relatif en translation par rapport à la lame selon l'axe de la lame, le moyen de répartition comportant un élément linéaire (120) selon un axe (160) perpendiculaire à l'axe de la lame et alimenté en fluide à répartir et
- au moins un moyen d'aspiration (115) du fluide de coloration et/ou d'un fluide de rinçage, associé à un moyen de déplacement relatif en translation par rapport à la lame selon l'axe de la lame ;
dans lequel le moyen d'aspiration est disposé successivement au moyen de répartition, **caractérisé en ce qu'**il comporte, de plus, un moyen de commande simultané de la répartition du fluide de rinçage par le moyen de répartition et de l'aspiration du fluide de rinçage par le moyen d'aspiration, créant ainsi sur la lame, entre le moyen de répartition et le moyen d'aspiration un écoulement turbulent nettoyant les impuretés de l'élément organique réparti sur la lame.

2. Dispositif (10, 20, 30) selon la revendication 1, dans lequel au moins un moyen d'aspiration (115) comporte un élément linéaire (120) selon un axe perpendiculaire à l'axe de la lame (105) pour véhiculer un fluide aspiré.

3. Dispositif (10, 20, 30) selon la revendication 2, dans lequel l'élément linéaire (120) d'au moins un moyen de répartition (115) est l'élément linéaire (120) d'au moins un moyen d'aspiration (115).

4. Dispositif (10, 20, 30) selon l'une des revendications 1 à 3, dans lequel au moins un moyen de répartition (115) comporte deux moyens d'alimentation en fluide mis en oeuvre simultanément.

5. Dispositif (10, 20, 30) selon la revendication 4, dans lequel le moyen de répartition comporte un moyen de mélange des fluides issus des moyens d'alimentation.

6. Dispositif (10, 20, 30) selon l'une des revendications 1 à 5, pour l'hématologie, dans lequel l'élément organique est un liquide organique, qui comporte, de plus :
- au moins un distributeur (170) d'au moins une goutte de liquide organique sur la lame placée sur le support,
- au moins un moyen d'étalement (145) perpendiculaire à l'axe (110) de la lame (105) étalant le liquide organique dans l'axe (110) de la lame (105) et
- au moins un moyen de relèvement (150) d'un moyen d'étalement désactivé pour abaisser le moyen d'étalement au-dessus de la lame pour venir en contact avec la goutte de liquide organique qui migre par capillarité sur le moyen d'étalement perpendiculaire à l'axe de la lame, la goutte étant étalée par déplacement relatif entre le moyen d'étalement et la lame.

7. Dispositif (10, 20, 30) selon la revendication 6, qui comporte un réservoir de nettoyage du moyen d'étalement dans lequel le moyen d'étalement est abaissé pour être nettoyé.

8. Dispositif (10, 20, 30) selon l'une des revendications 1 à 7, dans lequel le volume d'un fluide de coloration et/ou d'un fluide de rinçage réparti est compris entre 0,4 millilitre et 1 millilitre pour une lame rectangulaire de 25 millimètres par 75 millimètres.

9. Dispositif (10, 20, 30) selon l'une des revendications 1 à 8, qui comporte au moins deux supports (205, 310) de lame juxtaposés et des moyens de déplacement relatif (175) entre le dispositif de coloration (10, 20, 30) et chaque lame (105), les moyens de déplacement étant configurés pour disposer le dispositif de coloration selon l'axe (110) de chaque lame successivement.

10. Procédé (60) de coloration d'un élément organique sur au moins une lame (105), la lame définissant un axe (110) contenu dans le plan de la lame, **caractérisé en ce qu'**il comporte les étapes suivantes :
- disposition (61) d'au moins une lame de disposition de l'élément organique sur au moins un support de la lame,
- répartition (66) d'un fluide de coloration ou du fluide de rinçage sur la lame au moyen d'un élément linéaire (120) selon un axe (160) perpendiculaire à l'axe de la lame et
- aspiration (67) du fluide de coloration et/ou d'un fluide de rinçage au moyen d'un élément linéaire (120) selon un axe (160) perpendiculaire à l'axe de la lame ;
dans lequel on commande simultanément de la répartition du fluide de rinçage sur la lame et l'aspiration du fluide de rinçage, créant ainsi sur la lame un écoulement turbulent nettoyant les impuretés de l'élément organique réparti sur la lame.

11. Procédé (60) selon la revendication 10, qui comporte, de plus, les étapes suivantes :
- distribution (62) d'au moins une goutte de liquide organique sur la lame,
- abaissement (63) d'un moyen d'étalement (145) au-dessus de la lame,
- étalement (64) du liquide organique selon l'axe de la lame par déplacement entre le moyen d'étalement et la lame et
- relèvement (65) du moyen d'étalement.

12. Procédé (60) selon la revendication 11, qui comporte le nettoyage du moyen d'étalement par abaissement du moyen d'étalement dans un réservoir de nettoyage.

13. Procédé (60) selon l'une des revendication 10 à 12, dans lequel la répartition (66) d'un fluide de coloration ou du fluide de rinçage sur la lame comporte de mélanger des fluides.

14. Procédé (60) selon l'une des revendications 10 à 13, dans lequel le volume d'un fluide de coloration et/ou d'un fluide de rinçage réparti pendant la répartition est compris entre 0,4 millilitre et 1 millilitre pour une lame rectangulaire de 25 millimètres par 75 millimètres.

## Patentansprüche

1. Vorrichtung (10, 20, 30) zum Färben eines organischen Elements auf wenigstens einem Objektträger (105), wobei der Objektträger eine Achse (110) definiert, die in der Ebene des Objektträgers enthalten ist, die aufweist:
- wenigstens einen Halter (205, 310) des Objektträgers, auf dem der Objektträger zum Anordnen des organischen Elements angeordnet ist,
- wenigstens ein Verteilermittel (115) eines färbenden Fluids und/oder eines Reinigungsfluids auf dem Objektträger, kombiniert mit einem Mittel zur relativen translatorischen Verschiebung in Bezug auf den Objektträger gemäß der Achse des Objektträgers, wobei das Verteilermittel ein lineares Element (120) gemäß einer Achse (160) senkrecht zur Achse des Objektträgers aufweist und mit dem zu verteilenden Fluid versorgt wird und
- wenigstens ein Mittel zum Absaugen (115) des färbenden Fluids und/oder eines Reinigungsfluids, kombiniert mit einem Mittel zur relativen translatorischen Verschiebung in Bezug auf den Objektträger gemäß der Achse des Objektträgers;
wobei das Absaugmittel nach dem Verteilermittel angeordnet ist,
**dadurch gekennzeichnet, dass** sie zusätzlich ein Mittel zur gleichzeitigen Steuerung der Verteilung des Reinigungsfluids durch das Verteilermittel und der Absaugung des Reinigungsfluids durch das Absaugmittel aufweist, wodurch auf dem Objektträger zwischen dem Verteilermittel und dem Absaugmittel ein turbulenter Strom entsteht, der die Verunreinigungen des auf dem Objektträger verteilten organischen Elements entfernt.

2. Vorrichtung (10, 20, 30) nach Anspruch 1, wobei wenigstens ein Absaugmittel (115) ein lineares Element (120) gemäß einer Achse senkrecht zur Achse des Objektträgers (105) aufweist, um ein abgesaugtes Fluid zu transportieren.

3. Vorrichtung (10, 20, 30) nach Anspruch 2, wobei das lineare Element (120) wenigstens eines Verteilermittels (115) das lineare Element (120) wenigstens eines Absaugmittels (115) ist.

4. Vorrichtung (10, 20, 30) nach einem der Ansprüche 1 bis 3, wobei wenigstens ein Verteilermittel (115) zwei gleichzeitig eingesetzte Fluidversorgungsmittel umfasst.

5. Vorrichtung (10, 20, 30) nach Anspruch 4, wobei das Verteilermittel ein Mittel zum Mischen der Fluide aus den Versorgungsmitteln umfasst.

6. Vorrichtung (10, 20, 30) nach einem der Ansprüche 1 bis 5 für die Hämatologie, wobei das organische Element eine organische Flüssigkeit ist, die zusätzlich aufweist:
- wenigstens einen Spender (170) wenigstens eines Tropfens organischer Flüssigkeit auf den auf dem Halter platzieren Objektträger,
- wenigstens ein Ausbreitungsmittel (145) senkrecht zur Achse (110) des Objektträgers (105), das die organische Flüssigkeit in der Achse (110) des Objektträgers (105) ausbreitet und
- wenigstens ein Mittel zum Anheben (150) eines deaktivierten Ausbreitungsmittels, um das Ausbreitungsmittel über dem Objektträger zu senken, um mit dem Tropfen organischer Flüssigkeit in Kontakt zu treten, der durch Kapillarität auf dem Ausbreitungsmittel senkrecht zur Achse des Objektträgers migriert, wobei der Tropfen durch relative Verschiebung zwischen dem Ausbreitungsmittel und dem Objektträger ausgebreitet wird.

7. Vorrichtung (10, 20, 30) nach Anspruch 6, die einen Reinigungsbehälter des Ausbreitungsmittels umfasst, in den das Ausbreitungsmittel zur Reinigung abgesenkt wird.

8. Vorrichtung (10, 20, 30) nach einem der Ansprüche 1 bis 7, wobei das Volumen eines färbenden Fluids und/oder eines verteilten Reinigungsfluids zwischen 0,4 Milliliter und 1 Milliliter für einen rechteckigen Objektträger von 25 Millimetern mal 75 Millimeter beträgt.

9. Vorrichtung (10, 20, 30) nach einem der Ansprüche 1 bis 8, die wenigstens zwei nebeneinanderliegende Objektträgerhalter (205, 310) und Mittel zur relativen Verschiebung (175) zwischen der Färbevorrichtung (10, 20, 30) und jedem Objektträger (105) aufweist, wobei die Verschiebemittel derart ausgelegt sind, um die Färbevorrichtung gemäß der Achse (110) jedes Objektträgers nacheinander anzuordnen.

10. Verfahren (60) zum Färben eines organischen Elements auf wenigstens einem Objektträger (105), wobei der Objektträger eine Achse (110) definiert, die in der Ebene des Objektträgers enthalten ist, **dadurch gekennzeichnet, dass** es die folgenden Schritte umfasst:
- Anordnen (61) wenigstens eines Objektträgers zur Anordnung des organischen Elements auf wenigstens einem Objektträgerhalter,
- Verteilen (66) eines färbenden Fluids oder des Reinigungsfluids auf dem Objektträger mithilfe eines linearen Elements (120) gemäß einer Achse (160) senkrecht zur Achse des Objektträgers und
- Absaugen (67) des färbenden Fluids und/oder eines Reinigungsfluids mittels eines linearen Elements (120) gemäß einer Achse (160) senkrecht zur Achse des Objektträgers;
wobei gleichzeitig die Verteilung des Reinigungsfluids auf dem Objektträger und die Absaugung des Reinigungsfluids gesteuert wird, wodurch auf dem Objektträger ein turbulenter Strom entsteht, der die Verunreinigungen des auf dem Objektträger verteilten organischen Elements entfernt.

11. Verfahren (60) nach Anspruch 10, das ferner die folgenden Schritte aufweist:
- Spenden wenigstens eines Tropfens organischer Flüssigkeit (62) auf den Objektträger,
- Absenken (63) eines Ausbreitungsmittels (145) über dem Objektträger,
- Ausbreiten (64) der organischen Flüssigkeit gemäß der Achse des Objektträgers durch Verschieben zwischen dem Ausbreitungsmittel und dem Objektträger und
- Anheben (65) des Ausbreitungsmittels.

12. Verfahren (60) nach Anspruch 11, das die Reinigung des Ausbreitungsmittels durch Absenken des Ausbreitungsmittels in einen Reinigungsbehälter umfasst.

13. Verfahren (60) nach einem der Ansprüche 10 bis 12, wobei die Verteilung (66) eines färbenden Fluids oder des Reinigungsfluids auf dem Objektträger das Mischen der Fluide aufweist.

14. Verfahren (60) nach einem der Ansprüche 10 bis 13, wobei das Volumen eines färbenden Fluids und/oder eines während der Verteilung verteilten Reinigungsfluids zwischen 0,4 Milliliter und 1 Milliliter für einen rechteckigen Objektträger von 25 Millimetern mal 75 Millimeter beträgt.

## Claims

1. Device (10, 20, 30) for staining an organic element on at least one slide (105), the slide defining an axis (110) contained within the plane of the slide, which device comprises:
- at least one slide holder (205, 310) on which the slide holding the organic element is positioned;
- at least one means (115) for spreading a staining fluid and/or a rinsing fluid on the slide, paired with a means for relative motion in translation relative to the slide along the axis of the slide, the spreading means comprising a linear element (120) along an axis (160) perpendicular to the axis of the slide and supplied with spreading fluid; and
- at least one means (115) for suctioning the staining fluid and/or a rinsing fluid, paired with a means for relative motion in translation relative to each slide along the axis of the slide;
wherein the suction means is positioned in succession to the spreading means,
**characterised in that** it also comprises a means for simultaneously controlling the spreading of the rinsing fluid by the spreading means, and the suctioning of the rinsing fluid by the suction means, thus creating on the slide, between the spreading means and the suction means, a turbulent flow cleaning the impurities of the organic element spread over the slide.

2. Device (10, 20, 30) according to claim 1, wherein at least one suction means (115) comprises a linear element (120) along an axis perpendicular to the axis of the slide (105) for carrying a suctioned fluid.

3. Device (10, 20, 30) according to claim 2, wherein the linear element (120) of at least one spreading means (115) is the linear element (120) of at least one suction means (115).

4. Device (10, 20, 30) according to one of claims 1 to 3, wherein at least one spreading means (115) comprises two fluid supply means utilised simultaneously.

5. Device (10, 20, 30) according to claim 4, wherein the spreading means comprises a means for mixing fluids coming from the supply means.

6. Device (10, 20, 30) according to one of claims 1 to 5, for haematology, wherein the organic element is an organic liquid, which device also comprises:
- at least one dispenser (170) of at least one drop of organic liquid on the slide placed on the holder;
- at least one smearing means (145) perpendicular to the axis (110) of the slide (105) smearing the organic liquid in the axis (110) of the slide (105); and
- at least one means (150) for lifting a deactivated smearing means in order to lower the smearing means above the slide to come into contact with the drop of organic liquid, which migrates by capillary action over the smearing means perpendicular to the axis of the slide, the drop being smeared by relative motion between the smearing means and the slide.

7. Device (10, 20, 30) according to claim 6, which comprises a tank for cleaning the smearing means, into which the smearing means is lowered to be cleaned.

8. Device (10, 20, 30) according to one of claims 1 to 7, wherein the volume of a spread staining fluid and/or rinsing fluid is between 0.4 millilitres and 1 millilitre for a rectangular slide of 25 millimetres by 75 millimetres.

9. Device (10, 20, 30) according to one of claims 1 to 8, which comprises at least two juxtaposed slide holders (205, 310) and means (175) for relative motion between the staining device (10, 20, 30) and each slide (105), the means for motion being configured to position the staining device along the axis (110) of each slide in succession.

10. Method (60) for staining an organic element on at least one slide (105), the slide defining an axis (110) contained within the plane of the slide, the method being **characterised in that** it comprises the following steps:
- positioning (61) at least one slide holding the organic element on at least one slide holder;
- spreading (66) a staining fluid or rinsing fluid on the slide by means of a linear element (120) along an axis (160) perpendicular to the axis of the slide; and
- suctioning (67) the staining fluid and/or a rinsing fluid by means of a linear element (120) along an axis (160) perpendicular to the axis of the slide;
wherein the spreading of the rinsing fluid on the slide and the suctioning of the rinsing fluid are controlled simultaneously, thus creating on the slide a turbulent flow cleaning the impurities of the organic element spread over the slide.

11. Method (60) according to claim 10, which also comprises the following steps:
- dispensing (62) at least one drop of organic liquid onto the slide;
- lowering (63) a smearing means (145) above the slide;
- smearing (64) the organic liquid along the axis of the slide by movement between the smearing means and the slide; and
- lifting (65) the smearing means.

12. Method (60) according to claim 11, which comprises cleaning the smearing means by lowering the smearing means into a cleaning tank.

13. Method (60) according to one of claims 10 to 12, wherein the spreading (66) of a staining fluid or rinsing fluid on the slide comprises mixing fluids.

14. Method (60) according to one of claims 10 to 13, wherein the volume of a spread staining fluid and/or rinsing fluid during the spreading is between 0.4 millilitres and 1 millilitre for a rectangular slide of 25 millimetres by 75 millimetres.
